# EUROPÄISCHE PATENTSCHRIFT

(11) **EP 0 872 513 B1**
(45) Veröffentlichungstag und Bekanntmachung des Hinweises auf die Patenterteilung: **30.06.2004**
(21) Anmeldenummer: 98106427.2
(22) Anmeldetag: 08.04.1998
(51) Int. Cl.: C08J 9/16, C08F 287/00, C08L 25/06, C08L 51/04

(54) **Expandierbare Styrolpolymerisate**
Expandable styrene polymers
Polymères styréniques expansibles

(30) Priorität: 19.04.1997 DE 19716572
(43) Veröffentlichungstag der Anmeldung: 21.10.1998
(73) Patentinhaber: BASF AKTIENGESELLSCHAFT, 67056 Ludwigshafen (DE)
(72) Erfinder: Glück, Guiscard, Dr., 55129 Mainz (DE); Hahn, Klaus, Dr., 67281 Kirchheim (DE); Henn, Rolf, Dr., 68723 Oftersheim (DE); Wassmer, Karl-Heinz, Dr., 67112 Mutterstadt (DE); Gausepohl, Hermann, Dr., 67112 Mutterstadt (DE); Knoll, Konrad, Dr., 67069 Ludwigshafen (DE); Batscheider, Karl-Heinz, 67112 Mutterstadt (DE)

(56) Entgegenhaltungen:
- EP-A- 0 069 792
- WO-A-94/25516
- DE-A- 4 403 017
- DE-A- 4 420 952

## Beschreibung

Die Erfindung betrifft expandierbare Styrolpolymerisate, die zur Herstellung von elastischen Schaumstoffen geeignet sind.

Schaumstoffe auf Basis von expandierbaren Polystyrolpartikeln haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstofformteile bereits bei geringer Deformation brechen.

Es gab daher in der Vergangenheit bereits Versuche, die Elastizität von Polystyrolschaumstoffen zu erhöhen.

WO 94/25516 betrifft vorgeschäumte Perlen am kautschukmodifizierten Styrolpolymerisaten mit Zellwänden aus einer Polymermatrix aus a) einer kontinuierlichen Polystyrolphase und b) darin dispiergierten, flachen Kautschukpartikeln mit einem l':d'-Verhältnis von 10:1 bis 70:1, wobei die einzelnen Partikel eine Kautschuk-Schale haben, in der ein oder mehrere Polystyrol-Kerne eingeschlossen sind. Zur Herstellung dieser vorgeschäumten Perlen werden Polybutadien oder ein Polystyrol/Polybutadien-Zweiblockcopolymer in Styrol gelöst und das Styrol polymerisiert. Dabei entsteht ein kautschukmodifiziertes Styrolpolymerisat mit Kautschukpartikeln, die einen Durchmesser von 0,1 bis 1 µm aufweisen und in denen die Kern-Schale-Struktur vorgebildet ist. Dieses kautschukmodifizierte Styrolpolymerisat wird mit Treibmittel imprägniert und granuliert, und die treibmittelhaltigen Perlen werden geschäumt. Die Zähigkeit von Schaumstoffen auf dieser Basis läßt jedoch noch zu wünschen übrig, insbesondere die elastische Rückstellung ist unzureichend.

Des weiteren werden kautschukmodifizierte Styrol polymerisate in DE-A-4 403 017 und EP-A-0 069 792 offenbart.

Der vorliegenden Erfindung lag daher die Aufgabe zugrunde, weitere expandierbare kautschukmodifizierte Styrolpolymerisate bereitzustellen, die ein hervorragendes elastisches Rückstellvermögen aufweisen.

Gegenstand der Erfindung sind expandierbare, kautschukmodifizierte Styrolpolymerisate wie in Anspruch 1 beschrieben.

Das Verhältnis der mittleren Länge 1 der Kautschukpartikel zu ihrer mittleren Dicke d ist vorzugsweise größer als 5:1.

Ein weiterer Gegenstand der Erfindung ist ein Verfahren zur Herstellung der expandierbaren kautschukmodifizierten Styrolpolymerisate wie in Anspruch 3 definiert.

Ein weiterer Gegenstand der Erfindung sind vorgeschäumte Perlen aus kautschukmodifizierten Styrolpolymerisaten wie in Anspruch 4 beschrieben.

Dabei ist das Verhältnis der mittleren Länge l' der Kautschukpartikel zu ihrer mittleren Dicke d' vorzugsweise größer als 80:1.

Schaumstoffe, die aus derartigen vorgeschäumten Perlen hergestellt werden, zeichnen sich durch eine gute Lösungsmittelbeständigkeit und eine hohe Elastizität, insbesondere durch ein hervorragendes Rückstellvermögen aus. Dies ist deshalb überraschend, weil nach WO 94/25516 bei einem l':d'- Verhältnis von größer als 70:1 die Fähigkeit der Kautschukpartikel, die Rißbildung zu unterdrücken, verlorengeht.

Die expandierbaren Styrolpolymerisate enthalten in der Polymermatrix 70 bis 95 Gew.-%, vorzugsweise 85 bis 93 Gew.-% Polystyrol oder ein Styrolcopolymerisat mit bis zu 50 Gew.-%, vorzugsweise bis zu 80 Gew.-% einpolymerisierten Comonomeren. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet. Im Gegensatz zu den unten beschriebenen Blockcopolymeren handelt es sich hierbei um Randomcopolymere.

Die expandierbaren Styrolpolymerisate enthalten in der Polymermischung 5 bis 30, vorzugsweise 8 bis 25 Gew.% eines Butadien-Styrol-Blockcopolymeren in Form von in der Polystyrolphase dispergierten Partikeln. Die Blockcopolymere weisen einen Blockaufbau S-B/S(-S)ₙ auf, in dem S einen Polystyrolblock, B/S einen Butadien/Styrol-Copolymerblock mit statistischer Verteilung der Monomeren und n entweder 0 oder 1 bedeutet, wobei die Blöcke S zusammen 5 bis 40 Vol.% ausmachen.

Geeignete Blockcopolymere der Struktur S-B/S(-S)ₙ sind in WO 95/35335 beschrieben. Wesentlich ist dabei, daß in dem B/S-Block die Monomeren statistisch verteilt sind. Der Aufbau innerhalb dieses Blocks kann dabei entlang der Kette im statistischen Mittel homogen oder inhomogen sein. Derartige Blockcopolymere können hergestellt werden durch anionische Polymerisation der Monomeren in einem unpolaren Lösungsmittel, welches 0,1 bis 5 Gew.-% eines polaren Cosolvens enthält. Einzelheiten über geeignete Initiatoren, Kupplungsmittel, Lösungsmittel, Cosolventien und weitere Bedingungen der mehrstufigen Polymerisation sind in WO 95/35335 ausführlich beschrieben.

Für die mechanischen Eigenschaften ist der Volumenanteil der aus dem B/S-Block bestehenden Weichphase im Festkörper von entscheidender Bedeutung. Erfindungsgemäß liegt der Volumenanteil der Weichphase bei 60 95, bevorzugt bei 70 - 90 und besonders bevorzugt bei 80 90 Vol.-%. Die Polystyrolblöcke S bilden die Hartphase, deren Volumenanteil entsprechend 5 - 40, bevorzugt 10 - 30 und besonders bevorzugt 10 - 20 Vol.-% ausmacht.

Meßbar ist der Volumenanteil der beiden Phasen mittels kontrastierter Elektronenmikroskopie oder Festkörper-NMR-Spektroskopie. Der Anteil der Polystyrol-Blöcke läßt sich nach Osmiumabbau des Polybutadienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt. In dem hier betrachteten Bereich entsprechen für Styrol und Butadien die gewichtsprozentualen Anteile in etwa den Volumenprozentanteilen.

Im Sinne der Erfindung eindeutig definiert wird das Blockcopolymere durch den Quotienten aus dem Volumenanteil in Prozent der aus den B/S-Blöcken gebildeten Weichphase und dem Anteil an Butadieneinheiten im gesamten Blockcopolymer, der für die Kombination Styrol/Butadien vorzugsweise zwischen 25 und 70 Gew.-% liegt.

Durch die den statischen Einbau von Styroleinheiten in den Weichblock des Blockcopolymeren und die Verwendung von Cosolventien während der Polymerisation wird die Glasübergangstemperatur (T_{g}) beeinflußt. Eine Glasübergangstemperatur zwischen -50 und +25°C, bevorzugt -50 bis +5°C ist typisch.

Das Molekulargewicht des Blocks S liegt dabei i.a. zwischen 1000 bis 200.000, bevorzugt zwischen 3.000 und 80.000 [g/mol]. Innerhalb eines Moleküls können S-Blöcke unterschiedliche Molmasse haben.

Das Molekulargewicht des Blocks B/S liegt üblicherweise zwischen 2.000 bis 250.000 [g/mol], bevorzugt werden Werte zwischen 5.000 bis 150.000 [g/mol].

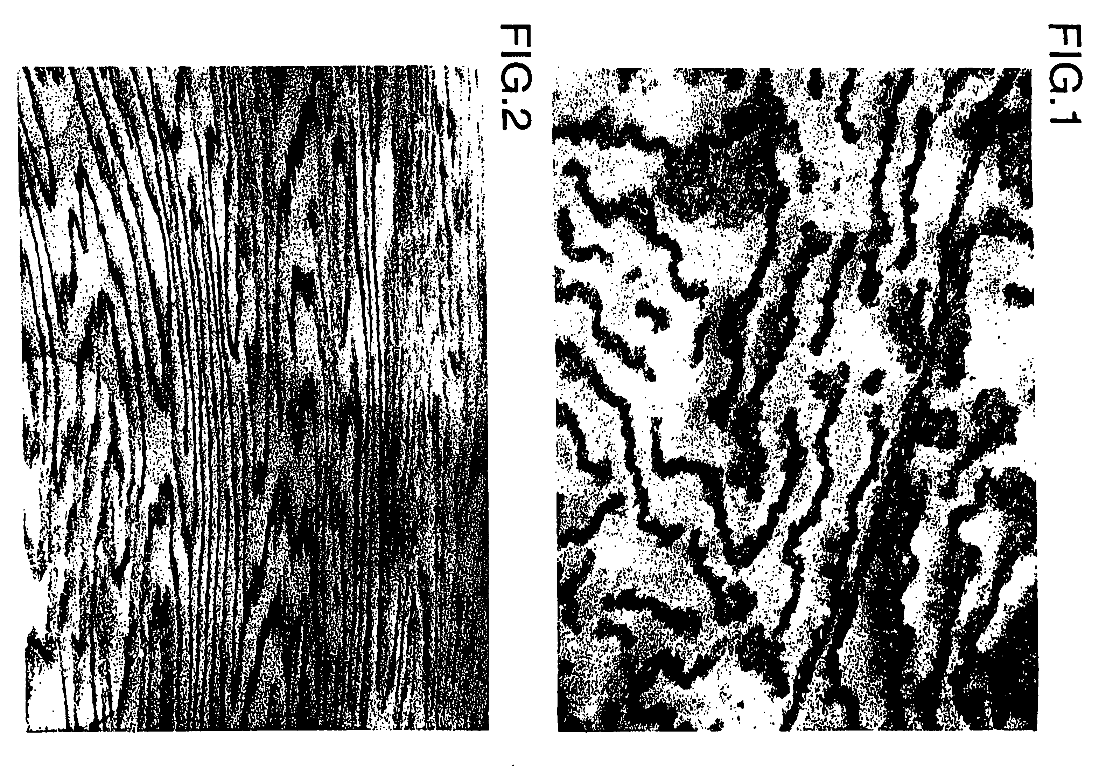

Das Blockcopolymere ist in der kontinuierlichen Phase in Form von Partikeln dispergiert, die eine kompakte Lamellenstruktur ohne Polystyrol-Einschlüsse aufweisen. Abb. 1 zeigt eine elektronenmikroskopische Aufnahme von einem Dünnschnitt einer ungeschäumten Perle (Vergrößerung 1:40.000), an der die Lamellenstrucktur der dunklen Kautschukphase gut zu erkennen ist. Dabei fällt auf, daß neben vielen sehr langen Bändern bzw. Streifen auch einige kürzere Segmente vorliegen. Das Verhältnis der mittleren Längen zu der mittleren Dicke der Lamellen ist vorzugsweise größer als 5:1, insbesondere größer als 10:1.

Neben dem oben beschriebenen Blockcopolymeren der Struktur S-B/S (-S)ₙ kann die Polymermischung in geringen Mengen auch andere Kautschuke und Blockcopolymere mit andersartiger Struktur enthalten.

Die expandierbaren Styrolpolymerisate enthalten 2 bis 15 Gew. Teile, vorzugsweise 3 bis 10 Gew. Teile, bezogen auf die Polymermischung, eines niedrig siedenden Treibmittels. Die Treibmittel sollen das Polystyrol nicht lösen, aber in Polystyrol löslich sein. Der Siedepunkt muß unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe, Mittel zur Verkürzung der Entformzeit beim Ausschäumen, sowie Ruß oder Graphit zur Verringerung der Wärmeleitfähigkeit der Schaumstoffe.

Als Zusatzstoffe sind auch Poly-(2,6-dimethyl)-1,4-phenylenether und Poly-1,4-phenylensulfid geeignet. In Mengen von 1 bis 20 Gew. Teile, bezogen auf 100 Gew. Teile der Polymermischung, bewirken diese Zusätze eine Erhöhung der Wärmeformbeständigkeit des Schaumstoffs.

Die expandierbaren Styrolpolymerisate werden vorzugsweise dadurch hergestellt, daß man das Blockcopolymere in Styrol und ggf. den Comonomeren löst, die Monomeren polymerisiert und das Polymerisat in Granulatform überführt, wobei man während oder nach der Polymerisation ein niedrigsiedendes Treibmittel zusetzt.

Man kann die Polymerisation nach bekannten Methoden in Masse, in Lösung oder in wässriger Suspension durchführen, wobei auch erst eine Vorpolymerisation in Masse und Auspolymerisieren in Suspension möglich ist. Bei der Suspensionspolymerisation kann das Treibmittel direkt zugesetzt werden, so daß unmittelbar ein treibmittelhaltiges Granulat entsteht. Man kann das Treibmittel aber auch nach der Polymerisation im kautschukmodifizierten Styrolpolymerisat imprägnieren, wobei eine Imprägnierung in wässriger Suspension bevorzugt ist.

Die expandierbaren Styrolpolymerisate liegen dann in Form von Partikeln, d.h. in Perlform oder Granulatform vor und haben vorteilhaft einen mittleren Durchmesser von 0,1 bis 6 mm, insbesondere 0,4 bis 3 mm.

Im Verlauf der Polymerisation des Styrols in Gegenwart der Doppelbindungen enthaltenden Blockcopolymeren findet eine Pfropfreaktion des Styrols an den Doppelbindungen statt, was zu einer teilweisen Vernetzung der entstehenden Polymeren führt. Der Grad der Vernetzung ist dadurch meßbar, daß man das Polymere in einem geeigneten Lösungsmittel, beispielsweise in Styrol bei 20°C, löst und den Rückstand auswiegt. Dabei zeigt sich, daß der unlösliche Anteil größer ist als der Kautschukanteil in der Ausgangsmischung vor der Polymerisation.

Die vernetzten Anteile sind natürlich auch in den beim anschließenden Schäumprozeß entstehenden Schaumstoffen enthalten; dort bewirken sie die verbesserte Lösungsmittelbeständigkeit und hohe Rückstellkraft.

Für die Herstellung der vorgeschäumten Perlen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden.

In den vorgeschäumten Perlen bestehen die Zellwände wieder aus der oben beschriebenen Polymermischung, wobei die Kautschuklamellen durch das Aufblähen der Zellen in Längsrichtung (vorzugsweise parallel zu den Grenzflächen der Zellwände) verstreckt werden und ein Verhältnis der mittleren Länge l' zur mittleren Dicke d' von größer als 10:1, vorzugsweise größer als 80:1 aufweisen. Abb. 2 zeigt eine elektronenmikroskopische Aufnahme von einem Dünnschnitt s einer vorgeschäumten Perle (Vergrößerung 1:40.000).

Für die Herstellung von Schaumstoffen werden die vorgeschäumten Perlen in bekannter Weise in nicht gasdicht schließenden Formen zu Formteilen verschweißt.

Die erhaltenen Schaumstoffe weisen Dichten von 5 bis 150 g/cm³, insbesondere 10 bis 100 g/cm³, auf.

Die aus den erfindungsgemäßen Styrolpolymerisaten hergestellten Schaumstoffe zeichnen sich durch eine hohe Elastizität aus. So beträgt die Restdeformation bei viermaliger Stauchung gemessen nach DIN 53 777, nicht mehr als 15 %. Damit sind sie herkömmlichen, kautschukfreien Styrolpolymeren deutlich überlegen. Darüberhinaus zeigen sie auch eine verringerte Wärmeleitfähigkeit.

Die vorgeschäumten Perlen sind von einer gleichmäßigen Zellstruktur und verschweißen beim Formprozeß ohne Bildung von Lunkern. Die so hergestellten Formkörper weisen eine ausgezeichnete Wärmeformbeständigkeit auf.

Darüber hinaus besitzen die erfindungsgemäßen Schaumstoffe eine überraschend gute Wärmedämmung, die bis zu 10 % besser ist als die konventioneller Polystyrole gleicher Dichte. Die Schäume und Formkörper sind problemlos recyclebar.

Die Erfindung soll an nachfolgenden Beispielen näher erläutert werden, wobei sich die Teile und Produkte auf das Gewicht beziehen.

### Beispiel 1

3,2 kg (15 %) eines Butadien/Styrol-Blockcopolymeren der Struktur S-B/S-S mit 26 Vol.% Polystyrolblöcken (STYROFLEX der BASF AG) werden in 16,0 kg (85 %) Styrol gelöst unter Beimischung von 64,0 g Dicumylperoxid, 19,2 g Dibenzylperoxid und 9,6 g dimerem α-Methylstyrol. Die organische Phase wird in 22,0 l vollentsalztes Wasser in einem 50 l Rührkessel eingebracht. Die wäßrige Phase enthält 78,8 g Natriumpyrophosphat und 146,1 g Magnesiumsulfat (Bittersalz). Man erhitzt die Suspension auf 80°C. Nach 100 Minuten wird 3,96 g eines sekundären Natriumalkansulfonates (Emulgator K 30/40, Bayer AG) zugegeben. Nach weiteren 95 Minuten wird 1536,0 g Pentan nachdosiert und bei 134°C auspolymerisiert.

Nach dem Abtrennen der wäßrigen Phase erhält man Perlen mit einem mittleren Durchmesser von 1,0 mm. Die Perlen lassen sich mit Wasserdampf auf ein Litergewicht von 25,0 g/cm³ nach 3 Minuten schäumen. Der Innenwassergehalt ist circa 1 % und der Reststyrolgehalt <1000 ppm.

Die Abbildungen zeigen elektronenmikroskopische Aufnahmen, die an ungeschäumten (Abb.1) bzw. geschäumten (Abb. 2) Perlen gemacht wurden. Man erkennt deutlich die Lamellenstruktur der dispergierten Kautschukpartikel, und man kann durch Ausmessen feststellen, daß bei den ungeschäumten Perlen das l:d-Verhältnis größer als 10:1 und bei den geschäumten Perlen größer als 100:1 ist.

### Beispiel 2

Beispiel 1 wurde wiederholt mit 10 % Blockcopolymeren.

### Beispiel 3

Beispiel 1 wurde wiederholt mit 20 % Blockcopolymeren.

## Patentansprüche

1. Expandierbare, kautschukmodifizierte Styrolpolymerisate, enthaltend
a) eine kontinuierliche Phase aus Polystyrol oder einem Styrolcopolymerisat mit bis zu 50 % Comonomeren und
b) 5 bis 30 Gew.-%, bezogen auf die Polymermischung, darin dispergierter Kautschukpartikel,
sowie 2 bis 15 Gew.teile, bezogen auf 100 Gew.teile der Polymermischung eines Treibmittels, mit einem Siedepunkt unterhalb dem Erweichungspunkt von Polystyrol, **dadurch gekennzeichnet, daß** die Kautschukpartikel aus einem Butadien/Styrol-Blockcopolymeren bestehen und eine kompakte Lamellenstruktur ohne Polystyrol-Einschlüsse aufweisen, wobei das Blockcopolymere den Blockaufbau S-B/S(-S)ₙ aufweist, in dem S einen Polystyrolblock, B/S einen Butadien/Styrol-Copolymerblock mit statistischer Verteilung der Monomeren und n entweder 0 oder 1 bedeutet, wobei die Blöcke S zusammen 5 bis 40 Vol.% ausmachen.

2. Expandierbare Styrolpolymerisate nach Anspruch 1, **dadurch gekennzeichnet, daß** die Polymermischung teilweise vernetzt ist, so daß ein Anteil, der größer ist als der Kautschukanteil in der Polymermischung, bei 20°C in Styrol unlöslich ist.

3. Verfahren zur Herstellung der expandierbaren Styrolpolymerisate nach Anspruch 1, **dadurch gekennzeichnet, daß** man das Blockcopolymere in Styrol und ggf. den Comonomeren löst, die Monomeren polymerisiert und das Polymerisat in Granulatform überführt, wobei man während oder nach der Polymerisation ein Treibmittel mit einem Siedepunkt unterhalb dem Erweichungspunkt von Polystyrol zusetzt.

4. Vorgeschäumte Perlen aus kautschukmodifizierten Styrolpolymerisaten mit Zellwänden aus einer Polymermischung, welche enthält
a) eine kontinuierlich Phase aus Polystyrol oder einem Styrolcopolymerisat mit bis zu 50 % Comonomeren und
b) 5 bis 30 Gew.%, bezogen auf die Polymermischung, darin dispergierter Kautschukpartikel mit Lamellenstruktur,
**dadurch gekennzeichnet, daß** die Kautschukpartikel aus einem Butadien/Styrol-Blockcopolymeren bestehen und eine kompakte Lamellenstruktur ohne Polystyrol-Einschlüsse aufweisen, wobei das Blockcopolymere den Blockaufbau S-B/S(-S)ₙ aufweist, in dem S einen Polystyrolblock, B/S einen Butadien/Styrol-Copolymerblock mit statistischer Verteilung der Monomeren und n entweder 0 oder 1 bedeutet, wobei die Blöcke S zusammen 5 bis 40 Vol.% ausmachen.

## Claims

1. An expandable, rubber-modified styrene polymer comprising
a) a continuous phase comprising polystyrene or a styrene copolymer containing up to 50 % of comonomers and
b) from 5 to 30 % by weight, based on the polymer mixture, of rubber particles dispersed therein,
and also from 2 to 15 parts by weight, based on 100 parts by weight of the polymer mixture, of a blowing agent having a boiling point below the softening poing of polystyrene, wherein the rubber particles comprise a butadiene/styrene block copolymer and have a compact lamellar structure without polystyrene inclusions, where the block copolymer has the block structure S-B/S(-S)ₙ where S is a polystyrene block, B/S is a butadiene-styrene copolymer block having a random distribution of the monomers, n is either 0 or 1 and the blocks S together make up from 5 to 40 % by volume.

2. An expandable styrene polymer as claimed in claim 1, wherein the polymer mixture is partially crosslinked so that a proportion which is greater than the proportion of rubber in the polymer mixture is insoluble in styrene at 20°C.

3. A process for preparing the expandable styrene polymers as claimed in claim 1, which comprises dissolving the block copolymer in styrene and, if desired, the comonomers, polymerizing the monomers and converting the polymer into granule form, with a blowing agent having a boiling point below the softening point of polystyrene being added during or after the polymerization.

4. Prefoamed beads comprising rubber-modified styrene polymers and having cell walls comprising a polymer mixture which comprises
a) a continuous phase comprising polystyrene or a styrene copolymer containing up to 50 % of comonomers and
b) from 5 to 30 % by weight, based on the polymer mixture, of rubber particles having a lamellar structure dispersed therein,
wherein the rubber particles comprise a butadiene-styrene block copolymer and have a compact lamellar structure without polystyrene inclusions, where the block copolymer has the block structure S-B/S(-S)ₙ where S is a polystyrene block, B/S is a butadiene-styrene copolymer block having a random distribution of the monomers, n is either 0 or 1 and the blocks S together make up from 5 to 40 % by volume.

## Revendications

1. Polymères styréniques modifiés avec du caoutchouc et expansibles, contenant
a) une phase continue de polystyrène ou d'un copolymère styrénique avec jusqu'à 50 % de comonomères et
b) de 5 à 30 % en poids par rapport au mélange de polymères de particules de caoutchouc dispersées dans le mélange,
ainsi que de 2 à 15 parts massiques par rapport à 100 parts massiques du mélange de polymères d'un agent d'expansion avec un point d'ébullition en dessous du point de ramollissement du polystyrène, **caractérisés en ce que** les particules de caoutchouc se composent d'un copolymère bloc butadiène/styrène et comportent une structure en lamelles compacte sans inclusion de polystyrène, sachant que le copolymère bloc comprend le bloc S-B/S(-S)ₙ où S est un bloc polystyrène, B/S un bloc copolymère butadiène/styrène avec une répartition statistique des monomères, et n vaut soit 0, soit 1, et dans lequel les blocs S font en tout de 5 à 40 % du volume.

2. Polymères styréniques expansibles selon la revendication 1, **caractérisés en ce que** le mélange de polymères est partiellement réticulé de sorte qu'une part plus importante que la part de caoutchouc dans le mélange de polymères est insoluble dans le styrène à 20 °C.

3. Procédé de fabrication des polymères styréniques expansibles selon la revendication 1, **caractérisé en ce qu'**on dissout le copolymère bloc dans le styrène et, le cas échéant, dans les comonomères, qu'on polymérise les monomères et qu'on transfère le polymère sous forme de granulés, sachant que pendant ou après la polymérisation, on ajoute un agent d'expansion avec un point d'ébullition en dessous du point de ramollissement du polystyrène.

4. Perles pré-expansées à base de polymères styréniques modifiés avec du caoutchouc dont les parois des cellules sont à base d'un mélange de polymères, lequel mélange contient
a) une phase continue de polystyrène ou d'un copolymère styrénique avec jusqu'à 50 % de comonomères et
b) de 5 à 30 % en poids par rapport au mélange de polymères de particules de caoutchouc dispersées dans le mélange avec une structure en lamelles,
**caractérisées en ce que** les particules de caoutchouc se composent de copolymères blocs butadiène/styrène et comportent une structure en lamelles compacte sans inclusion de polystyrène, sachant que le copolymère bloc comprend le bloc S-B/S(-S)ₙ où S est un bloc polystyrène, B/S un bloc copolymère butadiène/styrène avec une répartition statistique des monomères, et n vaut soit 0, soit 1, et dans lequel les blocs S font en tout de 5 à 40 % du volume.
